# EUROPEAN PATENT APPLICATION

(11) **EP 2 743 819 A2**
(43) Date of publication of application: **18.06.2014**
(21) Application number: 13196056.9
(22) Date of filing: 06.12.2013
(51) Int. Cl.: G06F 3/0488, G06F 3/0482, G06F 3/0354

(54) **Terminal and method for providing user interface using a pen**

(30) Priority: 12.12.2012 KR 20120144616
(71) Applicant: Samsung Electronics Co., Ltd, Gyeonggi-do 443-742 (KR)
(72) Inventor: Park, Hong-Joon, 443-742 Gyeonggi-do (KR); Lee, Myung Hwan, 443-742 Gyeonggi-do (KR); Park, Jin, 443-742 Gyeonggi-do (KR)
(74) Representative: Nederlandsch Octrooibureau

(57) **Abstract**

A terminal and a method of providing a user interface using a pen are provided. The terminal includes a pen attachment/detachment perception switch configured to detect attachment and detachment of a pen; a touch screen panel configured to detect a state of the pen; and a controller configured to activate a terminal screen when a signal corresponding to the detachment of the pen from the pen attachment/detachment perception switch has been received, and to display a menu item list, including one or more applications, on the terminal screen when a hovering event by the pen has been detected by the touch screen panel.

## Description

### BACKGROUND OF THE INVENTION

### 1. Field of the Invention

The present invention generally relates to a terminal and a method of providing a user interface by using a pen, and more particularly, to a terminal and a method of providing a user interface according to a state of the pen, such as an attachment and detachment of the pen and a pen button input.

### 2. Description of the Related Art

Portable terminals have been widely used because of their portability. In particular, among portable terminals, a mobile communication terminal, which can perform a voice communication during movement thereof, is a very popular portable terminal which most people use. The portable terminal supports not only a mobile communication function but also various user functions such as, for example, a file playing function, a file searching function, a file editing function, and the like. A user may perform various functions as described above using the portable terminal.

However, a size of the portable terminal is limited with respect to its portability. Accordingly, a size of a display area for displaying information in the portable terminal is significantly smaller than a TV monitor, or the like. There is a disadvantage in that it is not easy to perform various user inputs on such a small-sized display area. Therefore, in the prior art, not only a touch of a finger of the user but also input means using a pen, such as a stylus pen, are being used. A user can perform a more detailed touch using a pen input means. By using the pen input means, a user can select a menu icon displayed on the touch screen of the portable terminal, and operate and use an application corresponding to the selected menu icon.

As described above, a conventional portable terminal receives a pen input, selects a menu icon displayed on a touch screen corresponding to the pen input, and executes an application corresponding to the menu icon.

However, in the prior art, in order to execute the specific function of the portable terminal, it is required to separate the pen from the portable terminal and select a menu icon on the touch screen of the portable terminal by using the separated pen, which makes it cumbersome to select the menu icon using the pen.

Further, in the prior art, since a physical contact between the pen and the touch screen is required to execute an application, the pen is required to contact the touch screen several times.

### SUMMARY OF THE INVENTION

The present invention has been made to address at least the problems and disadvantages described above, and to provide at least the advantages described below. Accordingly, aspects of the present invention provide a terminal and a method for providing a convenient user interface according to a state of a pen.

According to an aspect of the present invention, a terminal for providing a user interface using a pen is provided. The terminal includes a pen attachment/detachment perception switch configured to detect attachment and detachment of the pen; a touch screen panel configured to determine a state of the pen; and a controller configured to activate a terminal screen when a signal, corresponding to the detachment of the touch pen from the pen attachment/detachment perception switch, has been received, and to display a menu item list, corresponding to one or more applications, on the terminal screen when a hovering event by the pen has been detected by the touch screen panel.

According to another aspect of the present invention, a method of providing a user interface using a pen is provided. The method includes activating a terminal screen when thepen has been detached from a terminal; and displaying a menu item list corresponding to one or more applications on the terminal screen when a hovering event by the pen has been detected.

### BRIEF DESCRIPTION OF THE DRAWINGS

The above and other aspects, features, and advantages of the present invention will be more apparent from the following detailed description taken in conjunction with the accompanying drawings, in which:
FIG. 1 is a block diagram illustrating a construction of a portable terminal according to an embodiment of the present invention;
FIG. 2 is a front perspective view of a portable terminal according to an embodiment of the present invention;
FIG. 3 is a rear perspective view of a portable terminal according to an embodiment of the present invention;
FIG. 4 is a flowchart illustrating a process in which a portable terminal provides a user interface based on a state of a pen according to an embodiment of the present invention;
FIG. 5 illustrates an example of a process in which a portable terminal provides a user interface based on a state of a pen according to an embodiment of the present invention
FIG. 6 is a flowchart illustrating a process in which a portable terminal provides a user interface based on a pen button input according to an embodiment of the present invention;
FIG. 7 illustrates an example of a process in which a portable terminal provides a user interface in response to a pen button input during execution of a specific application according to an embodiment of the present invention; and
FIG. 8 illustrates an example of a process in which a portable terminal provides a predetermined function in response to a pen button input during execution of an application using a touch pen according to an embodiment of the present invention.

### DETAILED DESCRIPTION OF EMBODIMENTS OF THE PRESENT

### INVENTION

Hereinafter, various embodiments will now be described in more detail with reference to the accompanying drawings in which embodiments of the present invention are shown. However, the present invention is not restricted or limited by these embodiments. Identical reference numerals shown in each drawing represent members performing identical functions.

Although terms including an ordinal number such as first, second, etc. may be used to describe various elements, the elements are not restricted by these terms. The terms are only used to distinguish one element from another element. For example, a first element could be a second element, and similarly, a second element could be a first element without departing from the scope of the present invention. The terms used in this description are for the purpose of describing particular embodiments only and are not intended to limit the present invention. As used herein, singular forms are intended to include plural forms as well, unless the context clearly indicates otherwise.

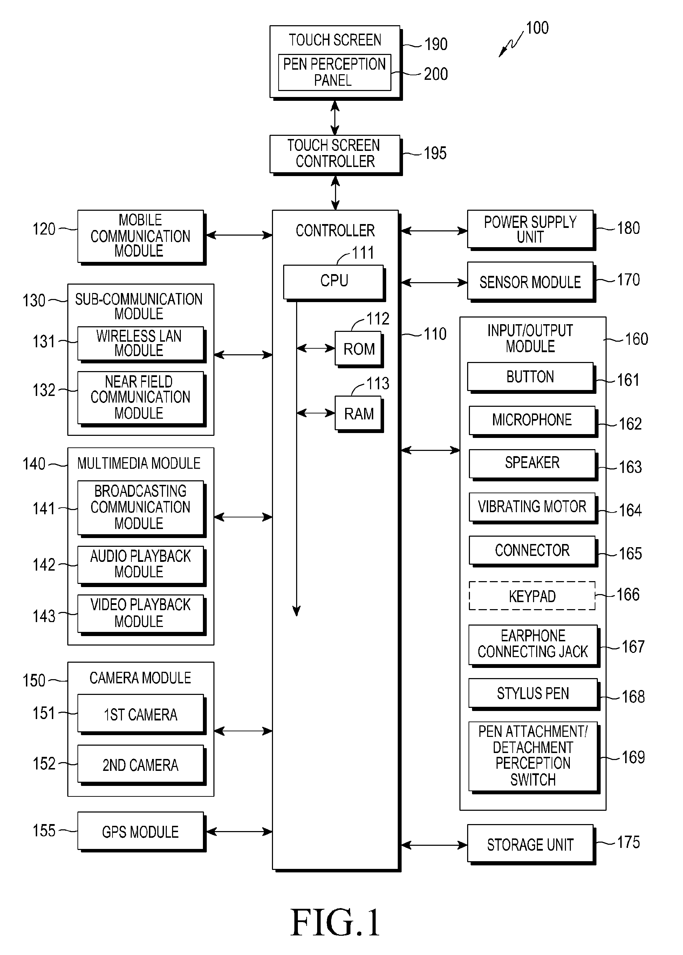

FIG. 1 is a block diagram illustrating a construction of a portable terminal according to an embodiment of the present invention.

Referring to FIG. 1, a device 100 may be connected with an external device (not shown) by using an external device connector such as a sub-communication module 130, a connector 165, and/or an earphone connecting jack 167. The external device may include various devices such as, for example, an earphone, an external speaker, a Universal Serial Bus (USB) memory, a charger, a cradle, a docking station, a Digital Media Broadcasting (DMB) antenna, a mobile payment related device, a health care device (e.g., a blood sugar measuring device), a game machine, and a vehicle navigation device, which may be detachably connected to the device 100 in a wired manner. Moreover, the external device may include a Bluetooth communication device, a Near Field Communication (NFC) device, a Wi-Fi Direct communication device, and a wireless Access Point (AP), which may be connected to the device 100 in a wireless manner through near field communication. Furthermore, the external device may include other devices such as, for example, a cell phone, a smart phone, a tablet PC, a desktop PC, and a server.

Referring to FIG. 1, the device 100 includes a touch screen 190, and a touch screen controller 195. In addition, the device 100 includes a controller 110, a mobile communication module 120, a sub-communication module 130, a multimedia module 140, a camera module 150, a GPS module 155, an input/output module 160, a sensor module 170, a storage unit 175, a power supply unit 180, and a pen perception panel 200. The sub-communication module 130 includes at least one of a wireless LAN module 131 and a near field communication module 132. The multimedia module 140 includes at least one of a broadcasting communication module 141, an audio playback module 142, and a video playback module 143. The camera module 150 includes at least one of a first camera 151 and a second camera 152. The input/output module 160 includes at least one of a button 161, a microphone 162, a speaker 163, a vibration motor 164, the connector 165, an optional keypad 166, and the earphone connecting jack 167. Further, in an embodiment of the present invention, the input/output module 160 further includes a stylus pen 168 and a pen attachment/detachment perception switch 169.

The controller 110 may include a CPU 111, a Read Only Memory (ROM) 112, in which control programs for control of the device 100 are stored, and a Random Access Memory (RAM) 113, which stores signals or data input from the outside of the device 100 or is used as a memory area for operations performed in the device 100. The CPU 111 may include a single core, a dual core, a triple core, or a quadruple core processor. The CPU 111, the ROM 112, and the RAM 113 may be connected to each other through an internal bus.

The controller 110 may control the mobile communication module 120, the sub-communication module 130, the multimedia module 140, the camera module 150, the GPS module 155, the input/output module 160, the sensor module 170, the storage unit 175, the power supply unit 180, the touch screen 190, the touch screen controller 195, and the pen perception panel 200.

In an embodiment of the present invention, when a signal indicating a detachment of the stylus pen 168 from the pen attachment/detachment perception switch 169 has been received, the controller 110 switches the device 100 from a sleep mode to a wake up mode, turns on a touch screen, and then displays a predetermined screen. Herein, the sleep mode refers to an inactive mode of the terminal converted into a low power state when the device 100 does not perform operations for a predetermined time period. In addition, the wake up mode refers to an active mode of the terminal in which the portable terminal performs general operations. The predetermined screen refers to a screen displayed on the touch screen 190 at a time of switching to the wake up mode, such as an idle screen, a lock screen, and the like of the portable terminal.

When information regarding a state of the pen such as a hovering or a pen button input has been received from the pen perception panel 200, the controller 110 performs an operation corresponding to the state of the pen. For example, when information regarding a hovering event occurrence has been received from the pen perception panel 200, the controller 110 displays a menu item list for executing one or more applications on the touch screen 190. The menu item list includes menu items related to one or more applications using the pen or menu items related to one or more recently used applications. When there is a touch input for selecting one of the menu items listed on the touch screen 190, the controller 110 executes an application corresponding to the selected menu item.

When information regarding the hovering event occurrence and the pen button input is received from the pen perception panel 200 in the wake up mode, the controller 110 performs a notification operation in order to indicate the occurrence of the pen button input. For example, in order to indicate the occurrence of the pen button input, the controller 110 may display a notification message on the touch screen 190 or increase the normally-set transparency of the color of the entire displayed screen. Further, the controller 110 may further display a guide message for a function, which can be performed through the pen button input, on the touch screen 190.

Also, when the pen button input is received while an application using the touch pen is executed, the controller 110 displays a screen for setting one or more functions corresponding to a specific application. For example, when the pen button input is received while a picture drawing application is executed, the controller 110 may display a set-up screen, which sets each function such as, for example, a setting for a character input function, a setting for a pen input function, a setting for an erasing function, or the like. In this scenario, the controller 110 may continuously convert and display the set-up screen for each function, through a continuous input of the pen button.

The stylus pen 168 may be inserted and stored in the device 100, and may be pulled out of and be detached from the device 100 when it is to be used.

The pen attachment/detachment perception switch 169, which is operated based on the attachment and detachment of the stylus pen 168, may be provided at an area within the device 100 in which the stylus pen 168 is inserted, so that the pen attachment/detachment perception switch 169 may provide a signal, indicating the attachment or detachment of the stylus pen 168, to the controller 110. The pen attachment/detachment perception switch 169 is arranged at an area in which the stylus pen 168 is inserted, so that the pen attachment/detachment perception switch 169 is in direct or indirect contact with the stylus pen 168 when the stylus pen 168 is attached. Accordingly, the pen attachment/detachment perception switch 169 generates a signal corresponding to the attachment or detachment of the stylus pen 168 and then provides the signal to the controller 110, based on the direct or indirect contact with the stylus pen 168.

When the stylus pen 168 comes within a predetermined distance of the pen perception panel 200 of the device 100, a magnetic field generated by a coil in the stylus pen 168 may trigger a hovering event at a predetermined point of the pen perception panel 200. To this end, the device 100 may perform an operation of scanning a magnetic field formed in the pen perception panel 200 in real-time or during the predetermined time period.

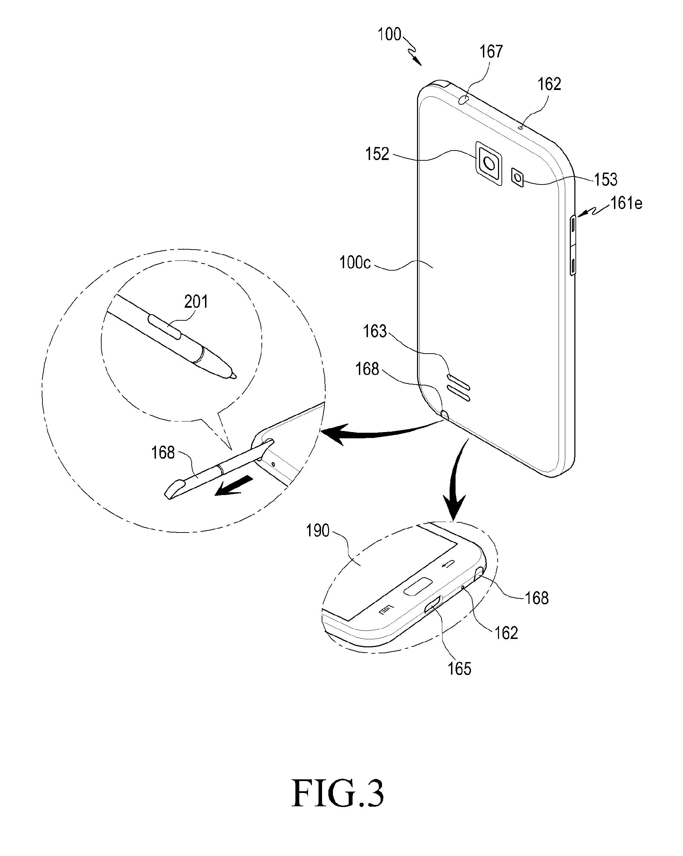

In addition, a button 201 (FIG. 3) included in the stylus pen 168 may be pressed by the user. A specific signal value may be generated, by the stylus pen 168 in response to the pressing of the button 201, and then transmitted to the pen perception panel 200. To this end, a specific capacitor, an additional coil, or a specific element which can change an electrostatic induction may be arranged in an area adjacent to the button 201. Further, a corresponding element may be designed to be connected to the coil in response to a touch or pressing of the button 201, so as to change an electromagnetic induction value induced in the pen perception panel 200, thereby making it possible to detect the touch or pressing of the button 201 of the stylus pen 168. Also, a wireless signal corresponding to the pressing of the button 201 may be generated, the generated wireless signal may be transmitted to a receiver arranged in a separate area of the device 100, and the device 100 may detect the pressing of the button 201 of the stylus pen 168 according to the received wireless signal. Further, the stylus pen 168 generates a plurality of resonant frequencies, which are different from each other, according to a state of the pen and the pen perception panel 200 detects a resonant frequency of the pen perception panel 200, which corresponds to the resonant frequency generated from the stylus pen 168, so that the stylus pen 168 can determine a state of the pen such as a touch, a hovering, or the like.

The sensor module 170 includes at least one sensor for detecting the state of the device 100. For example, the sensor module 170 may include a proximity sensor for detecting a user's proximity to the device 100, an illumination sensor (not shown) for detecting the quantity of light around the device 100, a motion sensor (not shown) for detecting an operation (for example, rotation of the device 100, and acceleration or vibration applied to the device 100) of the device 100, a geo-magnetic sensor (not shown) for detecting a point of a compass by using Earth's magnetic field, and a gravity sensor for detecting a gravity action direction, and an altimeter for detecting an altitude by measuring atmospheric pressure. At least one sensor may detect the state, generate a signal corresponding to the detection, and transmit the signal to the controller 110. The sensor of the sensor module 170 may be added or omitted according to the performance of the device 100.

The storage unit 175 may store signals and/or data, which is input and output according to the operations of the mobile communication module 120, the sub-communication module 130, the multimedia module 140, the camera module 150, the GPS module 155, the input/output module 160, the sensor module 170, and the touch screen 190, under the control of the controller 110. The storage unit 175 may store control programs and applications for the control of the device 100 or the controller 110.

The term "storage unit" may include the storage unit 175, the ROM 112 and the RAM 113 in the controller 110, or a memory card (not shown) (for example, an SD card, and a memory stick) which is mounted to the device 100. The storage unit may include a nonvolatile memory, a volatile memory, a Hard Disk Drive (HDD), or a Solid State Drive (SSD).

The power supply unit 180 may supply electric power to one battery or a plurality of batteries (not shown) disposed in the housing of the device 100 under a control of the controller 110. The one battery or the plurality of batteries (not shown) supply the electric power to the device 100. Moreover, the power supply unit 180 may supply the electric power, which is input from an external power source (not shown) through a wired cable connected with the connector 165, to the device 100. Furthermore, the power supply unit 180 may also supply the electric power, which is input in a wireless manner from an external power source through a wireless charging technology, to the device 100.

The touch screen 190 may provide user interfaces corresponding to various services (for example, telephone calls, data transmission, broadcasting, and photography) to the user. The touch screen 190 may transmit an analog signal, corresponding to at least one touch which is input to the user interface, to the touch screen controller 195. The touch screen 190 may receive an input of at least one touch through the user's body (for example, fingers including a thumb) or a touchable input means (for example, a stylus pen). Moreover, the touch screen 190 may receive an input of continuous movement of the at least one touch. The touch screen 190 may transmit an analog signal, corresponding to the continuous movement of the input touch, to the touch screen controller 195.

In the present invention, the touch is not limited to a contact between the touch screen 190 and the user's body or the touchable input means and may include noncontact (for example, a detectable space interval between the touch screen 190 and the user's body or the touchable input means is less than or equal to 1 mm). The detectable space interval on the touch screen 190 may be changed according to the performance or the structure of the device 100. This is especially true in a scenario in which the touch screen 190 is configured to output different values (e.g., electric current values) corresponding to a touch event due to a contact of the user's body or the touchable input means and by a non-contact state input event (e.g., a hovering event), so as to enable differentiation between the touch event and the non-contact state input event. Moreover, it is desirable that the touch screen 190 outputs different detected values (e.g., a current values) depending on a distance between a position, in which the hovering event occurs, and the touch screen 190.

For example, the touch screen 190 may utilize a resistive scheme, a capacitance scheme, an infrared scheme, or an acoustic wave scheme.

The touch screen controller 195 converts the analog signal received from the touch screen 190 to a digital signal (for example, X and Y coordinates), and then transmits the digital signal to the controller 110. The controller 110 controls the touch screen 190 using the digital signal received from the touch screen controller 195. For example, the controller 110 may allow selection of or execute a shortcut icon (not shown) displayed on the touch screen 190 in response to the touch event or the hovering event. Moreover, the touch screen controller 195 may also be included in the controller 110.

Further, the touch screen controller 195 detects values (e.g., a current value, or the like) output through the touch screen 190 and, thus, identify the distance between the position at which the hovering event occurs and the touch screen 190. Also, the touch screen controller 195 converts the identified distance value to a digital signal (e.g., Z coordinate) and then provide the identified distance value to the controller 110.

In addition, the touch screen 190 may include at least two touch screen panels which can respectively detect a touch or an approach by the user's body and the touchable input means, so as to simultaneously receive inputs by the user's body and the touchable input means. The at least two touch screen panels provide different output values to the touch screen controller 195. The touch screen controller 195 may differently perceive values which are input from the at least two touch screen panels, and may thus distinguish whether inputs from the touch screen 190 are made by the user's body or by the touchable input means.

The at least two touch screen panels according to the embodiment include the pen perception panel 200 for determining the state of the pen. The pen perception panel 200 of the present invention detects a hovering event generated by the stylus pen 168 and transmits a signal corresponding to the detected hovering event to the controller 110. Further, the pen perception panel 200 detects a button input by receiving a specific signal, generated according to pressing of the button 201 arranged on the stylus pen 168, and then transmits a signal, corresponding to the detected button input, to the controller 110.

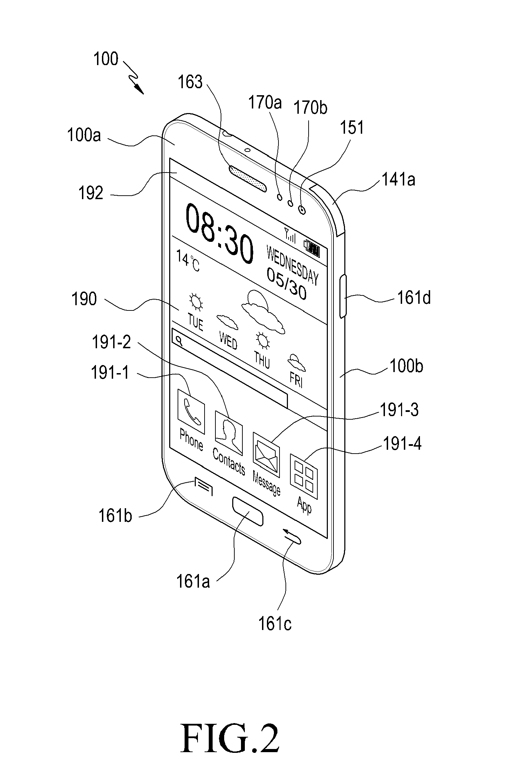

FIG. 2 is a front perspective view of a portable terminal according to an embodiment of the present invention. FIG. 3 is a rear perspective view of a portable terminal according to an embodiment of the present invention.

Referring to FIG. 2, a touch screen 190 is disposed at a central area of a front surface 100a of a device 100. The touch screen 190 is largely formed to occupy most of the front surface 100a of the device 100. FIG. 2 shows an example in which a main home screen is displayed on the touch screen 190. The main home screen corresponds to a first picture displayed on the touch screen 190 when the power of the device 100 is turned on. Moreover, in a case in which the device 100 has several pages of different home screens, the main home screen may correspond to a first home screen of the several pages of home screens. Shortcut icons 191-1, 191-2, and 191-3 for executing frequently used applications, a main menu key 191-4, a time, and weather may be displayed in the home screen. The main menu key 191-4 displays a menu picture on the touch screen 190. Furthermore, a status bar 192 for displaying a state of the device 100, such as a battery charging state, an intensity of a received signal, and a current time, may be formed at an upper end portion of the touch screen 190.

A home button 161 a, a menu button 161 b, and a back button 161 c may be formed at a lower portion of the touch screen 190.

The home button 161a results in displaying of the main home picture on the touch screen 190. For example, when the home button 161a is touched in a state in which another home screen or the menu screen are displayed on the touch screen 190, the main home screen may be displayed on the touch screen 190. Moreover, when the home button 161a is touched, while the applications are executed on the touch screen 190, the main home screen shown in FIG. 2 may be displayed on the touch screen 190. Furthermore, the home button 161a may also be used to allow displaying of recently used applications or a task manager on the touch screen 190.

The menu button 161b provides a connection menu on the touch screen 190. The connection menu may include, for example, a widget addition menu item, a background image change menu item, a search menu item, an edit menu item, and an environment setup menu item.

The back button 161 c may display the screen executed shortly before the currently executed screen, or may terminate the application which is currently being used.

A first camera 151, an illumination sensor 170a, and a proximity sensor 170b may be disposed at an edge portion of the front surface 110a of the device 100. A second camera 152, a flash 153, and at least one speaker 163 may be disposed on a rear surface 100c of the device 100 (FIG. 3).

For example, a power/reset button 161d, a volume control button 161e, a ground wave DMB antenna 141a for receiving of broadcasts, and one or more microphones 162 may be disposed on a side surface 100b of the device 100. The DMB antenna 141a may be fixed to the device 100, or may be detachably formed.

Moreover, the connector 165 is formed on a lower side surface of the device 100. A plurality of electrodes are formed in the connector 165, and may be connected with an external device in a wired manner. The earphone connecting jack 167 may be provided at an upper side surface of the device 100. An earphone may be inserted into the earphone connecting jack 167.

Further, the stylus pen 168 may be provided at the lower side surface of the device 100. The stylus pen 168 may be inserted and stored within the device 100. Also, the stylus pen 168 may be removed/detached from the device 100 when it is to be used. The stylus pen 168 may include the button 201.

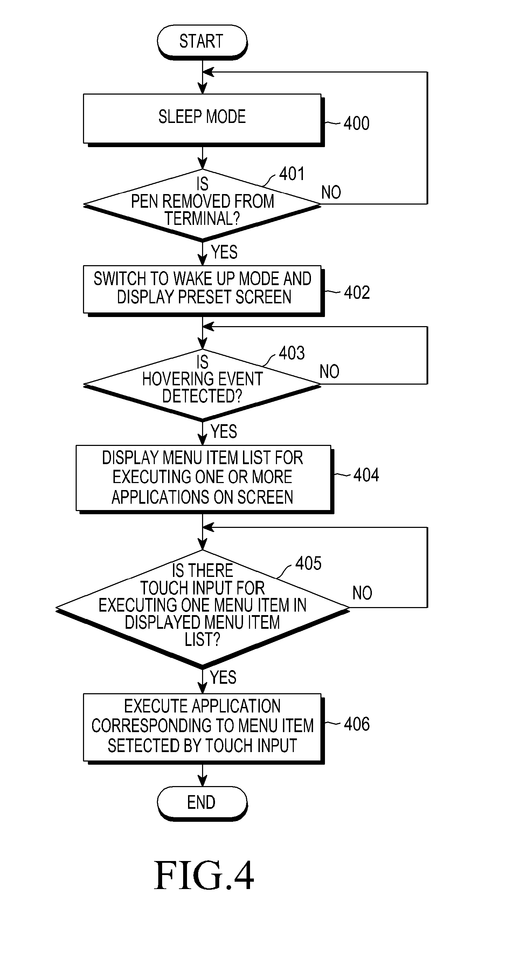

FIG. 4 is a flowchart illustrating a process in which a portable terminal provides a user interface based on a state of a pen according to an embodiment of the present invention.

Referring to FIG. 4, the device 100 is the sleep mode in step 400.

In step 401, the controller 110 determines whether the stylus pen 168 is removed from the portable terminal 100. When the stylus pen 168 has been removed from the portable terminal 100, the controller 110 proceeds to step 402. When the stylus pen 168 has not been removed from the portable terminal, the controller 110 maintains the sleep mode in step 400.

In step 402, the controller 110 changes the mode of the portable terminal to a wake up mode and displays a preset screen on the touch screen 190.

In step 403, the controller 110 determines whether a hovering event is detected on the touch screen 190. When a hovering event has been detected, the controller 110 proceeds to step 404. When a hovering event has not been detected, the controller 110 repeats step 403 and determines whether a hovering event is detected.

In step 404, the controller 110 displays a menu item list for executing one or more applications on the screen of the touch screen 190. Herein, the menu item list may include menu items related to one or more recently used applications or menu items related to one or more applications using the pen.

In step 405, the controller 110 determines whether there is a touch input selecting one menu item in the displayed menu item list. When there is the touch input, the controller 110 proceeds to step 406. When there is no touch input, the controller 100 repeats step 405 and determines whether there is a touch input for executing one menu item in the displayed menu item list.

In step 406, the controller 110 executes an application corresponding to the menu item selected by the touch input. In other words, the controller 110 executes an application corresponding to a menu item selected by a touch input of the touch pen, so as to display a screen of the executed application on the touch screen 190.

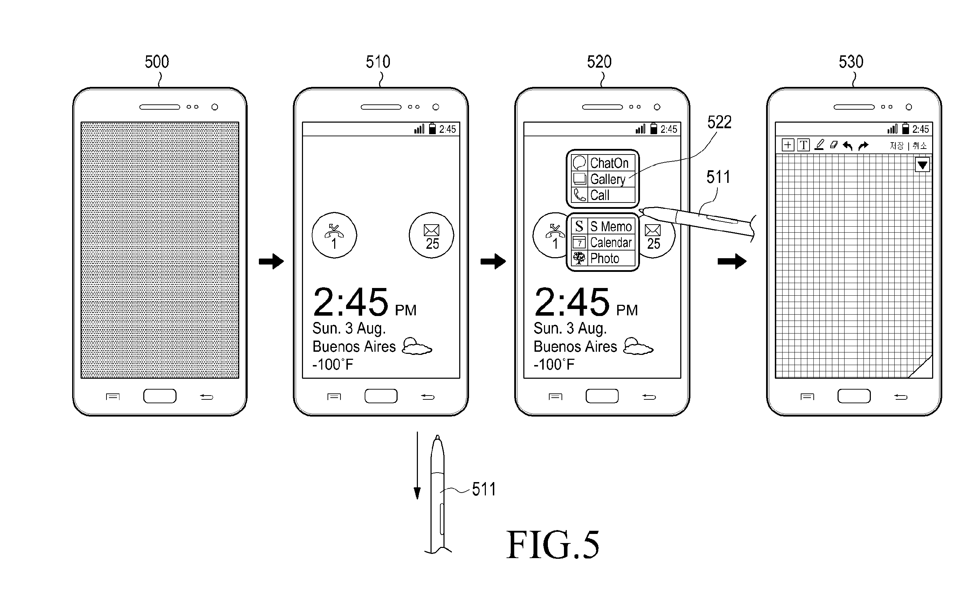

FIG. 5 illustrates a process in which a portable terminal provides a user interface based on a state of a pen according to an embodiment of the present invention.

When a touch pen 511 of the portable terminal is removed from the portable terminal in the sleep mode, as indicated by reference numeral 500, the controller 110 changes the mode of the portable terminal to the wake up mode, as indicated by reference numeral 510. In other words, when a signal corresponding to the detachment of the touch pen 511 from the pen attachment/detachment perception switch 169 is received while the portable terminal is in the sleep mode, the controller 110 changes the mode of the portable terminal to the wake up mode and displays a preset screen on the touch screen 190. The preset screen may be a general idle screen, a lock screen, or the like.

When a hovering event signal of the touch pen 511 from the pen perception panel 200 has been received by the touch screen 190, the controller 110 displays a screen, including a menu item list 522 corresponding to one or more functions of the terminal, as indicated by reference numeral 520 on the touch screen 190. The menu item list may include a list of menu items for applications that have recently been used by the user and a list of menu items for applications using the touch pen 511. For example, the menu item list may display a list of applications as indicated by reference numeral 522.

When a pen touch input for a specific menu item on the one or more menu item list has been detected, the controller 110 executes an application corresponding to the specific menu item selected by the pen touch input as indicated by reference numeral 530. For example, when there is a touch input for selecting a menu item related to a gallery application, the controller 110 may display an execution screen related to the gallery application on the touch screen 190 as indicated by reference numeral 530.

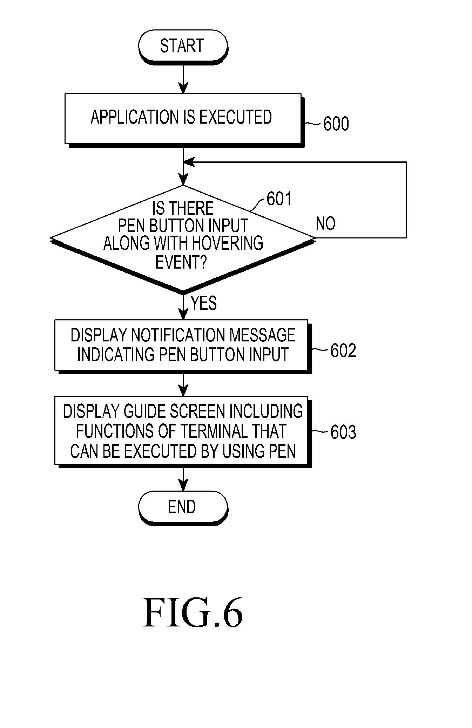

FIG. 6 is a flowchart illustrating a process in which a portable terminal provides a user interface based on a pen button input according to an embodiment of the present invention.

While an application is executed in step 600, the controller 110 determines whether there is a pen button input along with a hovering event on the touch screen 190 in step 601. When there is the pen button input along with the hovering event, the controller 110 proceeds to step 602. When there is no pen button input along with the hovering event, the controller 110 repeats step 601 and again determines whether there is the pen button input along with the hovering event.

Specifically, the controller 110 displays a screen corresponding to the specific application on the touch screen 190 and determines whether a specific signal value, which is generated according to a pressing of the button 201 along with the hovering event signal by the touch pen 521, is received from the pen perception panel 200. In the present invention, the controller 110 may determine whether the specific signal, generated by the pressing of the button 201, and the hovering event signal for the touch pen 521 are received. Conversely, the controller 110 may determine whether the specific signal value, generated by to the pressing of the button 201, is received from the pen perception panel 200 without the hovering event signal.

In step 602, the controller 110 displays a notification message, indicating the pen button input, on the touch screen 190. The notification message may be displayed with a pop-up window including a sentence, such as "A pen button has been input." According to another embodiment of the present invention, the controller 110 may output a voice for a notification through the speaker 163 instead of or in addition to the notification message. In the above description of the embodiment of the present invention, the controller 110 displays the notification message for indicating the pen button input. However, in another embodiment, the controller 110 may display the current screen with a color transparency that is greater than a normally-set color transparency of the screen, by adjusting the color transparency of the screen.

In step 603, the controller 110 displays a guide screen including functions of the terminal which can be performed by using the pen. The guide screen may include sentences, which guide operations for performing, for example, a function of returning to a menu screen, a function of returning to a previous screen, a screen capture function, a memo application function, or the like. For example, the guide screen may include a sentence, such as "To execute a memo application, input pen button twice."

In the above description of the embodiment of the present invention, when a pen button input has been detected, a notification message, indicating the pen button input has been detected, is displayed and a guide screen including functions of the terminal, which can be performed by using a pen, is displayed. However, a guide screen according to the pen button input and a guide screen related to functions of the terminal may also be displayed on an idle screen.

In another embodiment of the present invention, when a pen button input is detected while an application using the touch pen is being executed, the controller 110 may display a set-up screen for setting functions usable in the application using a corresponding touch pen.

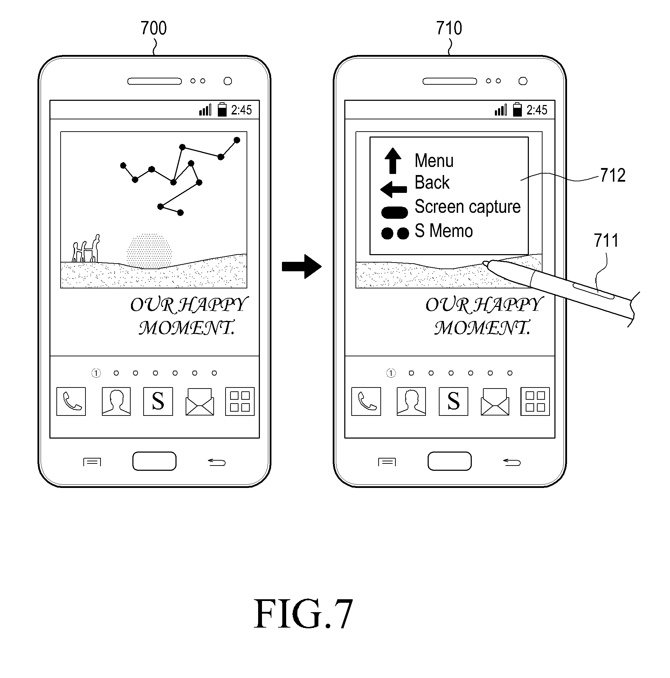

FIG. 7 illustrates an example of a process in which a portable terminal provides a user interface in response to a pen button input during execution of a specific application according to an embodiment of the present invention.

In a state in which the specific application is executed, as indicated by reference numeral 700, when an input of a pen button 711 is detected, the controller 110 displays a screen 710, which includes a guide screen 712 including a guide sentence, for performing functions of the terminal, on the touch screen 190. The guide screen 712, including the guide sentence(s), may include, for example, a menu function, a previous screen function, a screen capture function, and a memo function.

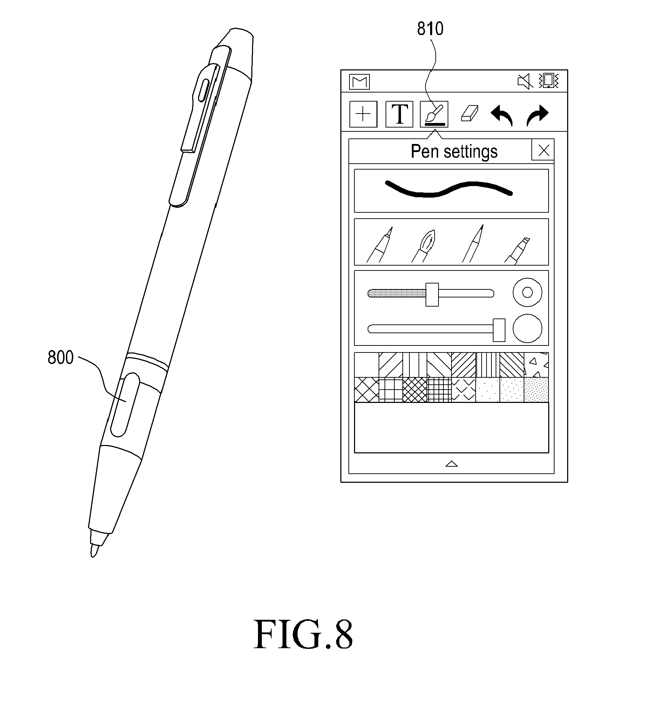

FIG. 8 illustrates an example of a process in which a portable terminal provides a set function screen in response to a pen button input during execution of an application using a touch pen, according to an embodiment of the present invention.

The following description of an embodiment of the present invention is based on an assumption that the terminal is in a state in which a drawing application is currently being executed, as evident in the screen of FIG. 8.

In the state in which the drawing application is executed, when there is an input of the pen button 800 to the touch screen 190, the controller 110 displays a screen for setting one or more functions related to the drawing application. For example, the controller 110 may display a screen for setting a pen tool 810. This screen may include areas for setting a type of a pen, a shape, size, type, opacity, and color of a brush, or the like.

Further, the controller 110 may convert and display a set-up screen for each function of the terminal according to the number of received pen button inputs. For example, when one pen button input has been received, the controller 110 may display a set-up screen for a text input function, whereas when two pen button inputs have been received, the controller 110 may display a set-up screen for a pen input function. When three pen button inputs have been received, the controller 110 may display a set-up screen for an erasing function. In other words, the controller 110 may convert and display a set-up screen for different functions based on the number of received pen button inputs.

As described above, the present invention activates the terminal in response to detection of a detachment of the pen and displays a screen for performing a function of the terminal based on detection of a state of the pen. Therefore, the present invention simplifies the interfacing operation to the user, which enables convenient use of the functions and applications of the terminal.

It is noted that the embodiments of the present invention are realized in the form of hardware, software, or a combination of hardware and software. The arbitrary software can be stored in, for example, irrespective of being erasable or rewritable, a volatile storage device, a non-volatile storage device such as a ROM, a memory such as a RAM, a memory chip device, an integrated circuit, an optically or magnetically recordable and machine (for example, a computer) readable storage medium such as a CD, a DVD, a magnetic disk, and a magnetic tape. Moreover the embodiments of the present invention can be realized by a computer or a mobile device including a controller and a memory, and it can be seen that the memory corresponds to an example of the storage medium which is suitable for storing a program or programs including instructions by which the embodiments of the present invention are realized, and is machine readable. Accordingly, the present invention includes a program which includes code for implementing a device and a method described in the claims of the present invention, and a storage medium which stores such a program as described above and is machine (computer) readable. Moreover, such a program, as described above, can be electronically transferred through an arbitrary medium such as a communication signal transferred through wired or wireless connection, and the present invention properly includes equivalents of such.

Moreover, the above-described user interface providing terminal can receive the program from a program provision device which is connected thereto in a wired or wireless manner, and store the program. The program provision device may include a program including instructions, which allow execution of the embodiments of the present invention, a memory for storing information necessary for the embodiments of the present invention, a communication unit for performing wired or wireless communication with the mobile device, and a controller for transmitting a corresponding program to the transmitter/receiver in response to a request of the mobile device or automatically.

In summary, the foregoing description provides embodiments of the present invention and is not used for limiting the protection scope thereof. Any modification, equivalent substitution, or improvement made without departing from the spirit and principle of the present invention should be covered by the protection scope of the following claims of the present invention.

## Claims

1. A terminal for providing a user interface using a pen, the terminal comprising:
a pen attachment/detachment perception switch configured to detect attachment and detachment of a pen;
a touch screen panel configured to detect a state of the pen; and
a controller configured to activate a terminal screen when a signal corresponding to the detachment of the pen from the pen attachment/detachment perception switch has been received, and to display a menu item list, including one or more applications, on the terminal screen when a hovering event by the pen has been detected by the touch screen panel.

2. The terminal of claim 1, wherein, when the signal corresponding to the detachment of the pen has been received in a state in which the terminal is in a sleep mode, the controller switches the terminal to a wake up mode and displays a preset screen on the terminal screen.

3. The terminal of claim 1, wherein the menu item list corresponds to one or more functions of the terminal, and comprises a list of menu items for recently executed applications and a list of menu items for applications using the pen.

4. The terminal of claim 1, wherein, when a menu item in the displayed menu item list has been selected, the controller executes an application corresponding to the selected menu item.

5. The terminal of claim 4, wherein, when a signal corresponding to a pen button input and a hovering event has been received from the touch screen panel, the controller displays a guide screen corresponding to functions of the terminal that can be performed by using the pen.

6. The terminal of claim 5, wherein the controller performs a notification operation indicating the pen button input has been detected.

7. The terminal of claim 5, wherein, when the executed application is a pen application and the signal corresponding to the pen button input has been received from the touch screen panel, the controller displays a screen for setting one or more functions of the application using the pen.

8. A method for providing a user interface using a pen, the method comprising:
activating a terminal screen when the pen has been detached from a terminal; and
displaying a menu item list, including one or more applications, on the terminal screen when a hovering event by the pen has been detected.

9. The method of claim 8, wherein activating the terminal screen comprises:
switching the terminal to a wake up mode when the pen has been detached in a state in which the terminal is in a sleep mode; and
displaying a preset screen on the terminal screen.

10. The method of claim 8, wherein the menu item list corresponds to one or more functions of the terminal, and comprises a list of menu items for recently executed applications and a list of menu items for applications using the pen.

11. The method of claim 8, further comprising:
when a menu item in the displayed menu item list has been selected, executing an application corresponding to the selected menu item.

12. The method of claim 11, further comprising:
when a pen button input and a hovering event have been detected, displaying a guide screen for functions of the terminal which can be performed using the pen.

13. The method of claim 12, further comprising:
performing a notification operation indicating the pen button input has been detected.

14. The method of claim 11, further comprising:
when the executed application is the application using the pen and the pen button input has been detected, displaying a screen for setting one or more functions of the application using the pen.
